(19) Europäisches Patentamt
European Patent Office
Office européen des brevets

(11) EP 2 717 075 A1

(12) **EUROPEAN PATENT APPLICATION**
published in accordance with Art. 153(4) EPC

(43) Date of publication:
**09.04.2014 Bulletin 2014/15**

(21) Application number: **12793571.6**

(22) Date of filing: **22.05.2012**

(51) Int Cl.:
***G02B 5/30*** *(2006.01)* ***C09B 31/072*** *(2006.01)*
***G02F 1/1335*** *(2006.01)*

(86) International application number:
**PCT/JP2012/063049**

(87) International publication number:
**WO 2012/165224 (06.12.2012 Gazette 2012/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2011 JP 2011121301**

(71) Applicants:
- **Nippon Kayaku Kabushiki Kaisha**
  **Tokyo 102-8172 (JP)**
- **Polatechno Co., Ltd.**
  **Joetsu-shi, Niigata 944-0101 (JP)**

(72) Inventors:
- **MOCHIZUKI Noriaki**
  **Kita-ku, Tokyo 115-8588 (JP)**
- **HIGETA Takahiro**
  **Kita-ku, Tokyo 115-8588 (JP)**
- **NISHIGUCHI Takuto**
  **Kita-ku, Tokyo 115-8588 (JP)**

(74) Representative: **Gille Hrabal**
**Brucknerstrasse 20**
**40593 Düsseldorf (DE)**

# (54) DYE-BASED POLARIZING ELEMENT AND POLARIZING PLATE

(57) To provide a polarizing element having a good polarizing property, and having a property of no discoloration by a treatment solution or pH of an adhesive.

Provided is a polarizing element that comprises a film of a polyvinyl alcohol resin or a derivative thereof containing a disazo pigment represented by Formula (1), and having been stretched by a factor of at least three from the initial length, in which the polarizing element has the lowest transmissivity at 565 to 700 nm in the transmissivity when two pieces of polarizing plates having the polarizing element are superimposed such that the absorption-axis directions orthogonally intersect.

[Chemical Formula 1]

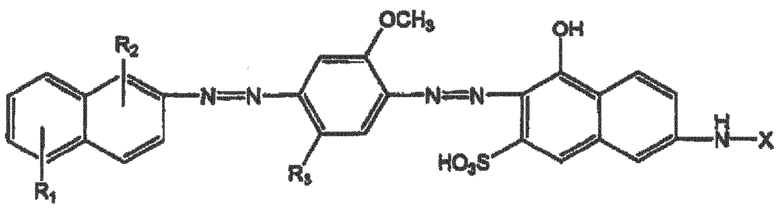

Formula (1)

(wherein, $R_1$ and $R_2$ each independently represent a sulfo group, an alkyl group, an alkoxy group, an alkoxy group having a sulfo group, a carboxy group, a nitro group, an amino group, or a substituted amino group, R3 represents an alkyl group, an alkoxy group, a sulfo group, or an alkoxy group having a sulfo group, and X represents a phenyl group or a benzoyl group that is unsubstituted or has one to three of one kind or more substituents selected from a group consisting of a methyl group, an alkyl group, a hydroxyl group, an amino group, a sulfo group and an alkoxy group.)

EP 2 717 075 A1

## Description

### Technical Field

The present invention relates to a dye-based polarizing element and a polarizing plate using the same.

### Background of the Invention

A polarizing element is generally produced by adsorbing and orienting iodine, which is a dichromatic pigment, or a dichromatic dye onto a polyvinyl alcohol-based resin film. Onto at least one side of this polarizing element, a protection film comprising triacetyl cellulose and the like is bonded through an adhesive layer to produce a polarizing plate, which is used in a liquid crystal display and the like. A polarizing plate using iodine as the dichromatic pigment is called an iodine-based polarizing plate, and on the other hand, a polarizing plate using the dichromatic dye as a dichromatic pigment is called the dye-based polarizing plate. Among them, the dye-based polarizing plate is characterized by having a high heat resistance, it has problems of low transmissivity, and as a result, low contrast to a polarizing plate having the same the polarization degree in comparison to the iodine-based polarizing plate. On the other hand, the dye-based polarizing plate has advantageous features in comparison to the iodine-based polarizing plate, such as a high heat resistance, a high moist heat durability and a high stability, and in addition, a high selectivity of the color by combination due to development and commercialization of pigments having various colors.

However, due to diversification of a protection layer of a polarizing element in recent years, various adhesives are used, and a problem of discoloration of a dye-based polarizing plate is pointed out. As a cause for the discoloration, influence of pH of a solution of an adhesive and the heat at the time of drying are pointed out to be main causes, and it is desired to develop a polarizing element having no discoloration due to the above-described causes. With respect to the discoloration by pH, improvement is demanded than before in the dye field of cloth dyeing, and similarly it is demanded to develop a polarizing element that can endure discoloration by pH in development of a polarizing element.

With respect to such discoloration due to pH, particularly discoloration by pH is pointed out when the pigment is a disazo-based pigment having violet to blue color, particularly when the wavelength having the lowest transmissivity (hereinafter, described as $\lambda$max) is 565 to 700 nm, in the transmissivity when two pieces of polarizing plates having a polarizing element are superimposed such that the absorption-axis directions orthogonally intersect. Thus, it is demanded to develop a polarizing element or a polarizing plate that can endure discoloration. Further, in the development of a polarizing element, for a polarizing plate to have a high polarizing property as a premise, it is very difficult to have a polarizing function, color and durability in combination. In addition, in recent years, as the intensity of a light source for optical use increases, resistance to such intense light, and heat generated therefrom have leaded to a problem of discoloration of a polarizing plate, and thus, demand for improvement thereof has been high.

### Citation List

### Patent Literature

Patent Literature 1: JP 2004-137452 A
Patent Literature 2: JP 63-189803 A
Patent Literature 3: JP 1-172907 A

### Non-Patent Literature

Non-Patent Literature 1: Dye chemistry; Written by Hosoda Yutaka

### Summary of Invention

### Problem to be Solved

Disazo pigments for a polarizing element are disclosed in Patent Documents 1 to 3. The $\lambda$max of the disazo pigments disclosed in Patent Document 1 is 550 nm in Examples 1 and 2, and thus the disazo pigments do not have 565 to 700 nm of $\lambda$max, which is a technical feature of the invention. In addition, Patent Document 2 discloses a polarizing plate exhibiting violet to blue. However, it is described that the pigment is discolored by pH, which demands improvement. In addition, Patent Document 3 discloses an invention of a coating-type polarizing plate using a disazo pigment. However,

in comparison with a polarizing element containing pigments in a polyvinyl alcohol-based film, the coating-type polarizing plate has a very low polarizing property, and has different λmax. Therefore, the performances or the color varies even when the same pigment is used in polarizing elements.

Solution to Problem

The inventors investigated earnestly to solve the problems, and as a result, newly found that a polarizing element that comprises a polyvinyl alcohol resin or a derivative thereof containing a specific pigment, and having been stretched by a factor of at least three from the initial length, in which the polarizing element has the lowest transmissivity at 565 to 700 nm in the transmissivity when two pieces of polarizing plates having the polarizing element are superimposed such that the absorption-axis directions orthogonally intersect, has high polarization degree, and has no discoloration by an aqueous solution at the time of the treatment or pH of an adhesive used when the polarizing element is disposed with the protection layer.

Namely, the invention relates to the followings:

(1) A polarizing element that comprises a film of a polyvinyl alcohol resin or a derivative thereof containing a disazo pigment represented by Formula (1), and having been stretched by a factor of at least three from the initial length, in which the polarizing element has the lowest transmissivity at 565 to 700 nm in the transmissivity when two pieces of polarizing plates having the polarizing element are superimposed such that the absorption-axis directions orthogonally intersect.

[Chemical Formula 1]

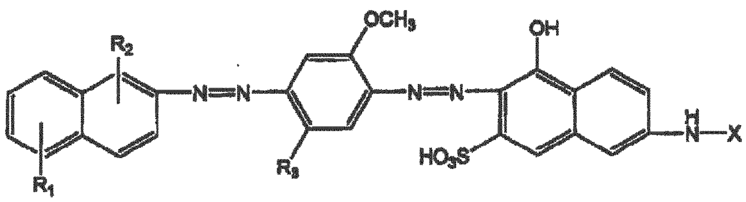

Formula (1)

(wherein, $R_1$ and $R_2$ each independently represent a sulfo group, an alkyl group, an alkoxy group, an alkoxy group having a sulfo group, a carboxy group, a nitro group, an amino group, or substituted amino group, $R_3$ represents an alkyl group, an alkoxy group, a sulfo group, or an alkoxy group having a sulfo group, and X represents a phenyl group or a benzoyl group that is unsubstituted or has one to three of one or more kinds of substituents selected from a group consisting of a methyl group, an alkyl group, a hydroxyl group, an amino group, a sulfo group and an alkoxy group.)

(2) A polarizing plate in which a protection layer is disposed on one side, or both sides of the polarizing element according to (1).

Effects of Invention

The polarizing element of the invention has favorable polarizing property, and has a property of no discoloration by a treatment solution or pH of an adhesive.

Detailed Description of the Invention

Hereinafter, the invention is described in detail.

The invention is a polarizing element that comprises a film of a polyvinyl alcohol resin or a derivative thereof containing a disazo pigment represented by Formula (1), and having been stretched by a factor of at least three from the initial length, in which the polarizing element has the wavelength having the lowest transmissivity (λmax) at 565 to 700 nm in the transmissivity when two pieces of polarizing plates having the polarizing element are superimposed such that the absorption-axis directions orthogonally intersect, and the polarizing element of the invention has favorable polarizing property, and acheives a property of no discoloration by a treatment solution or pH of an adhesive.

[Chemical Formula 2]

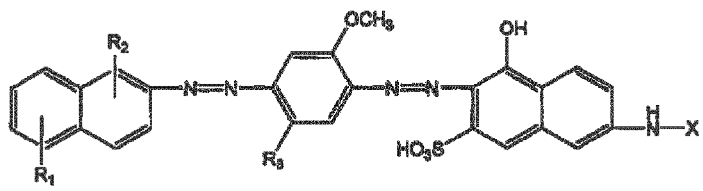

Formula (1)

(wherein, $R_1$ and $R_2$ each independently represent a sulfo group, an alkyl group, an alkoxy group, an alkoxy group having a sulfo group, a carboxy group, a nitro group, an amino group, or a substituted amino group, $R_3$ represents an alkyl group, an alkoxy group, a sulfo group, or an alkoxy group having a sulfo group, and X represents a phenyl group or a benzoyl group that is unsubstituted or has one to three of one or more kinds of substituents selected from a group consisting of a methyl group, an alkyl group, a hydroxyl group, an amino group, a sulfo group and an alkoxy group, and the alkyl group, the alkoxy group, or the alkoxy group having a sulfo group may be a lower group, preferably a group comprising 1 to 3 carbon atoms.)

These organic dyes may be used as free acid, or in addition, as an alkali metal salt (for example, Na salt, K salt, Li salt), an ammonium salt, or a salt of amines.

$R_1$ to $R_3$ represented in Formula (1) are not limited to these examples, but the compounds of Formulae (1-1) to (1-5) are exemplified as examples. Particularly, $R_1$ and $R_2$ are suitably structures represented by 2-aminonaphthalene disulfonic acid, and most suitably compounds exemplified by 2-aminonaphthalen-4,8-disulfonic acid (conventional name: C acid), 2-aminonaphthalen-6,8-disulfonic acid (conventional name: amino G acid), and 2-aminonaphthalen-5,7-disulfonic acid (conventional name: amino J acid). Particularly, $R_3$ is suitably a compound exemplified by a methyl group or a methoxy group.

[Chemical Formula 3]

Formula (1-1)

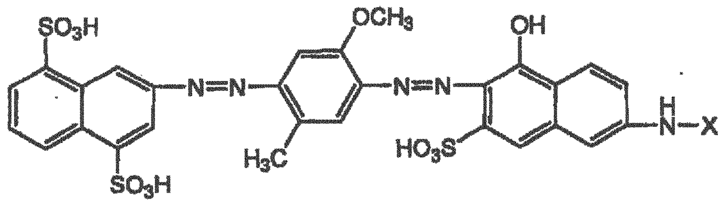

[Chemical Formula 4]

Formula (1-2)

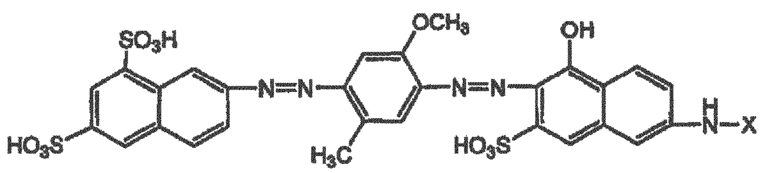

[Chemical Formula 5]

Formula (1-3)

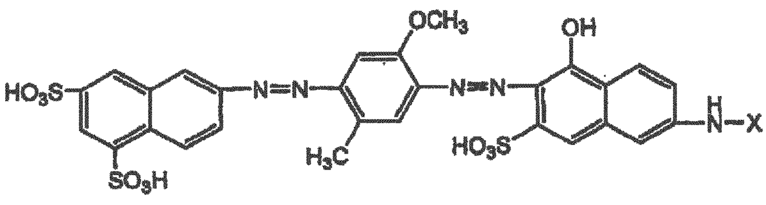

[Chemical Formula 6]

Formula (1-4)

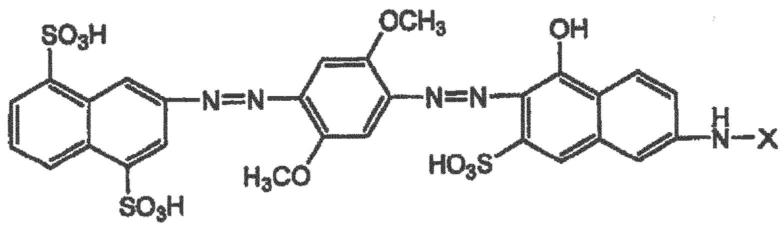

[Chemical Formula 7]

Formula (1-5)

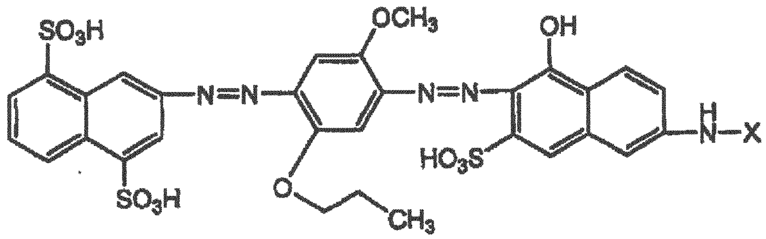

(In Formula (1), X represents a phenyl group or a benzoyl group that is unsubstituted or has one to three of one or more kinds of substituents selected from a group consisting of a methyl group, an alkyl group, a hydroxyl group, an amino group, a sulfo group and an alkoxy group.)

The compound is exemplified by Formulae (2-1) to Formula (2-5) although the compound is not limited thereto.

[Chemical Formula 8]

Formula (2-1)

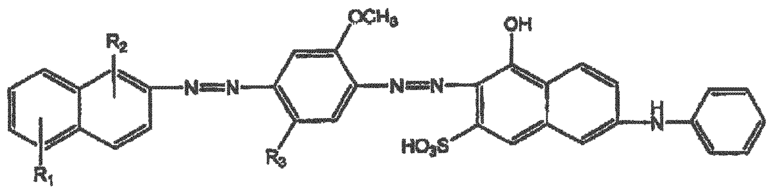

[Chemical Formula 9]

Formula (2-2)

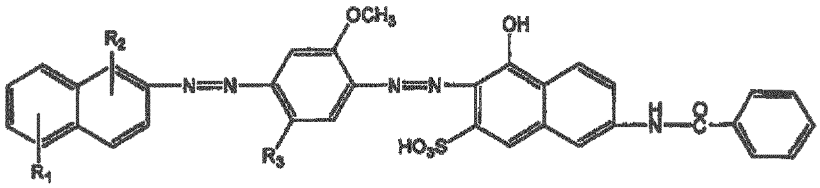

[Chemical Formula 10]

Formula (2-3)

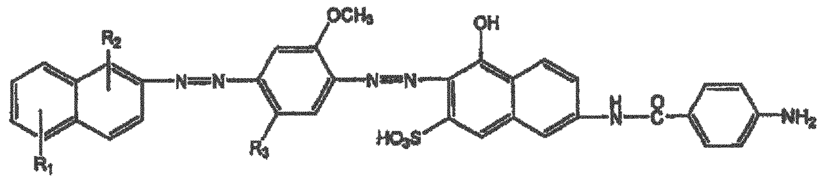

[Chemical Formula 11]

Formula (2-4)

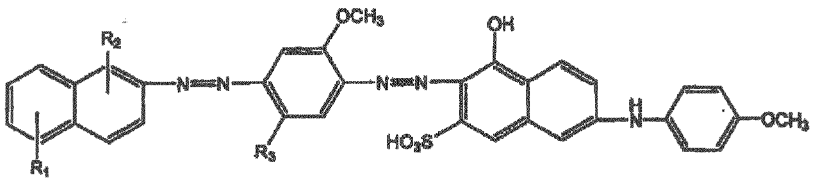

[Chemical Formula 12]

Formula (2-5)

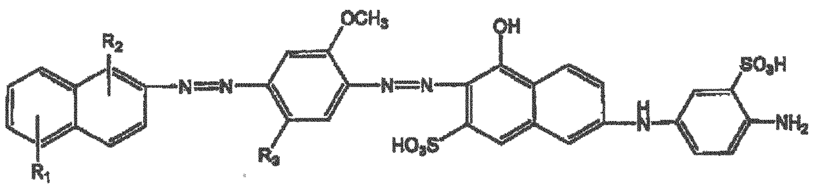

The pigment which is characterized by having the wavelength having the lowest transmissivity (λmax) at 565 to 700 nm in the transmissivity when the polarizing element and two pieces of polarizing plates having the polarizing element of the invention are superimposed such that the absorption-axis directions orthogonally intersect, is a compound represented by Formula (3) as a representative compound. By incorporating the compound represented by Formula (3) into a film of a polyvinyl alcohol resin or a derivative thereof, and stretching the film to three folds or more from the initial length, λmax becomes 580 nm, and the polarizing element has favorable polarizing property, and has a property of no discoloration by a treatment solution or pH, of an adhesive.

[Chemical Formula 13]

Formula (3)

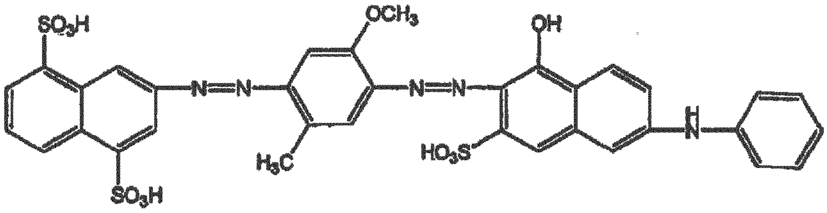

The azo compound of Formula (1) or a salt thereof (hereinafter, referred to as the disazo pigment of Formula (1)) can be easily produced by performing a known diazotization and coupling in accordance with an ordinary method of producing an azo dye as described in Non-Patent Document 1.

For example, a naphtyl group represented by Formula (4) is first diazotized with a known method, and subjected to acidic coupling with the amine compound represented by Formula (5) at 10°C to 20°C, and then hydrolyzed if necessary,

to obtain an aminoazo compound represented by Formula (6).

[Chemical Formula 14]

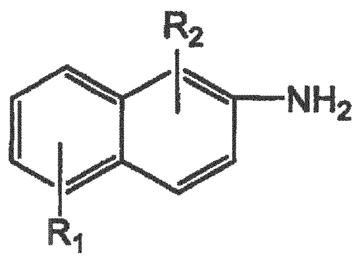

Formula (4)

(Wherein, $R_1$ and $R_2$ represent the same meanings as $R_1$ and $R_2$ in Formula (1).)

[Chemical Formula 15]

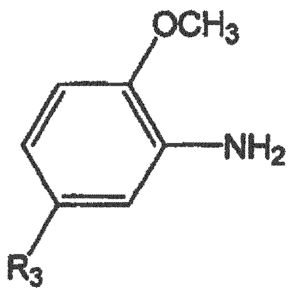

Formula (5)

(Wherein, $R_3$ represents the same meaning as $R_3$ in Formula (1).)

[Chemical Formula 16]

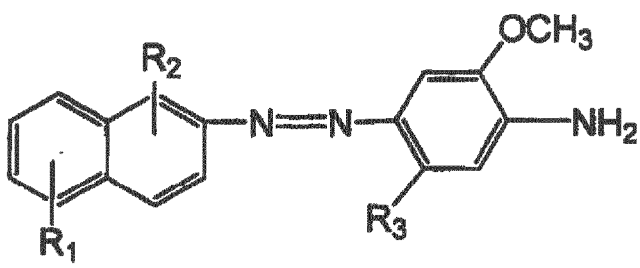

Formula (6)

(Wherein, $R_1$, $R_2$ and $R_3$ represent the same meanings as $R_1$, $R_2$ and $R_3$ in Formula (1).)

The compound represented by Formula (6) is diazotized with a known method, and subjected to coupling with naphthol represented by Formula (7) to obtain a solution containing the azo compound of Formula (1). Preferably, the diazotization process is performed by a sequential method in which a nitrite salt such as sodium nitrite is mixed with an aqueous solution or suspension of a mineral acid such as hydrochloric acid and sulfuric acid of the diazo ingredient, or by a reverse method in which a nitrite salt is added to a neutral or weak alkali aqueous solution of the diazo ingredient, and this is mixed with a mineral acid. The temperature of the diazotization is properly -10 to 40°C. In addition, the coupling process with aniline is performed by mixing an aqueous solution of an acid such as hydrochloric acid and acetic acid with each of the diazo liquids at a temperature of -10 to 40°C and an acidic condition of pH 2 to 7.

[Chemical Formula 17]

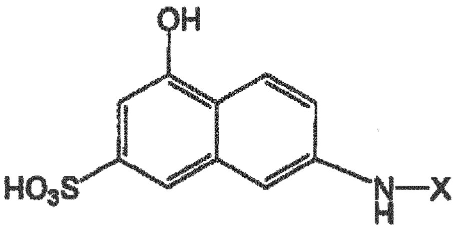

Formula (7)

(In the formula, X represents the same meaning as that in Formula (1).)

Then, this solution is evaporated to dryness, or salted out, filtered and dried, and crushed to obtain pulverized disazo pigments of Formula (1) of the present application. The disazo compound obtained in this manner is of Formula (1) and is generally used as a sodium salt, but may be also used as a lithium salt, a potassium salt, an ammonium salt, an alkyl amine salt, or the like.

The disazo pigment of Formula (1) may be used in combination with other organic pigments such that hue correction and polarizing performance can be improved. The organic pigment used in this case may be a pigment having an absorption property in a different wavelength region from the absorption wavelength region of the disazo pigment used in the invention, and having the high polarizing property. The dichromatic dye is not particularly limited, and may be those dyeing a hydrophilic polymer. Examples of the dichromatic dye include azo-based, anthraquinone-based, and quinophthalone-based dichromatic dyes, and also include pigments described in a color index. Examples of the dichromatic dye include C. I. Direct. Yellow 12, C. I. Direct. Yellow 28, C. I. Direct. Yellow 44, C. I. Direct. Orange 26, C. I. Direct. Orange 39, C. I. Direct. Orange 107, C. I. Direct. Red 2, C. I. Direct. Red 31, C. I. Direct. Red 79, C. I. Direct. Red 81, C. I. Direct. Red 247, C. I. Direct. Green 80, C. I. Direct. Green 59, and the organic dyes described in JP 2001-33627 A, JP 2002-296417 A, JP 2003-215338 A, WO 2004/092282, JP 2001-0564112 A, JP 2001-027708 A, JP 11-218611 A, JP 11-218610 A, and JP 60-156759 A. Such organic dyes may be used as a free acid, and in addition, may be used as an alkali metal salt (for example, Na salt, K salt, Li salt), an ammonium salt, or a salt of amines. However, the dichromatic dye is not limited to these, and a known dichromatic compound may be used, which is preferably an azo-based dye. In addition to the dichromatic dyes described above, other organic dyes may be used in combination as necessary.

The kind of the organic dye combined varies depending on the intended polarizing element, which may be a polarizing element of neutral color, a color polarizing element for a liquid crystal projector, or another color polarizing element, respectively. The combination ratio is not particularly limited, and the combination amount may be arbitrarily set according to a light source, a durability, required hue, and the like.

The disazo pigment of Formula (1) is impregnated into a polyvinyl alcohol-based resin or a derivative film thereof. A method of producing the polyvinyl alcohol resin constituting the polarizing element is not particularly limited, but, for example, a polyvinyl acetate resin may be saponified.

Examples of the polyvinyl acetate resin include polyvinyl acetate, which is a homopolymer of vinyl acetate, and in addition, a copolymer of vinyl acetate and another monomer copolymerizable with vinyl acetate, and the like. Examples of the another monomer copolymerizable with vinyl acetate include, for example, unsaturated carboxylic acids, olefins, vinyl ethers, unsaturated sulfonic acids, or the like. The saponification degree of the polyvinyl alcohol resin is ordinarily, preferably 85 to 100 mole%, and more preferably 95 mole% or more. This polyvinyl alcohol resin may be further modified. For example, polyvinyl formal, polyvinyl acetal, and the like modified with aldehydes may be also used. In addition, the polymerization degree of the polyvinyl alcohol-based resin is ordinarily, preferably 1,000 to 10, 000, and more preferably 1,500 to 6,000.

Examples of the derivative of the polyvinyl alcohol resin that can be used in the invention include the resins that have been subjected to the modification treatment, and the like.

A film produced from the polyvinyl alcohol resin or a derivative thereof (hereinafter, referred to as polyvinyl alcohol-based resin for both of them) is used as a raw film. A method of producing a film from the polyvinyl alcohol-based resin is not particularly limited, but the film may be produced with a known method. In this case, the polyvinyl alcohol-based resin film can contain glycerin, ethylene glycol, propylene glycol or low molecular polyethylene glycol and the like as a plasticizer. The amount of the plasticizer is preferably 5 to 20 weight%, and more preferably 8 to 15 weight%. The thickness of the raw film that comprising the polyvinyl alcohol-based resin is not particularly limited, but is preferably, for example, 5 to 150 μm, and more preferably 10 to 100 μm.

The polyvinyl alcohol-based resin film is first performed with a swelling process. The swelling process is performed by dipping the polyvinyl alcohol-based resin film into a 20 to 50°C solution for 30 seconds to 10 minutes. The solution is preferably water. The swelling process may be skipped if it is desired to shorten the time to produce the polarizing element, as the polyvinyl alcohol-based resin film swells up also at the time of dye treatment of the pigments.

A dyeing process is performed after the swelling process. The dyeing process is a process in which impregnation

is performed by dipping the polyvinyl alcohol-based resin film into a solution containing the dichromatic dye. The temperature of the solution in this process is preferably 5 to 60°C, more preferably 20 to 50°C, and particularly preferably 35 to 50°C. The dipping time to the solution may be suitably regulated, but is preferably regulated to 30 seconds to 20 minutes, and more preferably to 1 to 10 minutes. Although a method for the dyeing is preferably performed by dipping in the solution, the method for the dyeing may be also performed by applying the solution onto the polyvinyl alcohol-based resin film.

The solution containing the dichromatic dye may contain sodium chloride, sodium sulfate, sodium sulfate anhydride, sodium tripolyphosphate, and the like as a dyeing assistant. The content of the dyeing assistant may be adjusted to any concentration by the time or the temperature depending on the dye-affinity of the dye, but is preferably 0 to 5 weight%, and more preferably 0.1 to 2 weight%.

As a method for the pigment impregnation, the pigment impregnation may be performed by dipping the polyvinyl alcohol-based resin film into a solution containing the dichromatic dyes. Alternatively, the method may be a method in which the pigments are contained in a step of molding the raw film of the polyvinyl alcohol-based resin.

After the dyeing process, a washing process (hereinafter, referred to as a washing process 1) can be performed before proceeds to the next. The washing process 1 is a process of washing a dye solvent adhering to the surface of the polyvinyl alcohol-based resin film in the dyeing process. By performing the washing process 1, it is possible to suppress the dye from migration into the liquid to be treated in the following process. Water is generally used in the washing process 1. A washing method is preferably performed by dipping the polyvinyl alcohol-based resin film into the solution, but may be also performed by applying the solution onto the polyvinyl alcohol-based resin film. The washing time is not particularly limited, but preferably 1 to 300 seconds, and more preferably 1 to 60 seconds. The temperature of the solvent in the washing process 1 is necessarily a temperature where a hydrophilic polymer is not dissolved. The washing treatment is generally performed at 5 to 40°C.

After the dyeing process or the washing process 1, a process of incorporating a crosslinking agent and/or a water-resistant additive may be performed. As the crosslinking agent, for example, a boron compound such as boric acid, borax or ammonium borate; a multivalent aldehyde such as glyoxal or glutaraldehyde; a multivalent isocyanate-based compound such as a biuret type, an isocyanurate type or a block type; a titanium-based compound such as titanium oxysulfate; or the like may be used, but ethylene glycol glycidyl ether, polyamide epichlorohydrin, or the like may be used in addition. Examples of the water-resistant additive include succinic acid peroxide, ammonium persulfate, calcium perclorate, benzoin ethyl ether, ethylene glycol diglycidyl ether, glycerin diglycidyl ether, ammonium chloride or magnesium chloride and the like, but boric acid is preferably used. Using at least one or more kinds of the crosslinking agent and/or the water-resistant additive described above, a process of incorporating the crosslinking agent and/or the water-resistant additive is performed. The solvent at this time is preferably water, but is not limited thereto. The content concentration of the crosslinking agent and/or the water-resistant additive in the solvent in the process of incorporating the crosslinking agent and/or the water-resistant additive is preferably, for example, 0.1 to 6.0 weight%, and more preferably 1.0 to 4.0 weight% of the concentration with respect to the solvent for boric acid. The temperature of the solvent in this process is preferably 5 to 70°C, and more preferably 5 to 50°C. A method of incorporating the crosslinking agent and/or the water-resistant additive into the polyvinyl alcohol-based resin film is preferably dipping the polyvinyl alcohol-based resin film into the solution, but the solution may be also applied or coated onto the polyvinyl alcohol-based resin film. The treatment time in this process is preferably 30 seconds to 6 minutes, and more preferably 1 to 5 minutes. However, the crosslinking agent and/or the water-resistant additive are not necessarily incorporated, and this treatment process may be skipped when it is desired to shorten the time, or when cross-linking treatment or water-resistant treatment is unnecessary.

A stretch process is performed after performing the dyeing process, the washing process 1, or the process of incorporating the crosslinking agent and/or the water-resistant additive. The stretch process is a process of stretching the polyvinyl alcohol-based film monoaxially. The stretch method may be a wet stretch method or a dry stretch method, but the stretch ratio should be 3 folds or more from the initial length.

When the stretch method is the dry stretch method, and the medium for stretch and heating is air medium, the temperature of the air medium is preferably normal temperature to 180°C. In addition, the humidity is processed preferably within 20% to 95% RH of the atmosphere. Examples of the heating method include inter-roll zone stretch, roll heating stretch, pressure stretch, infrared heating stretch and the like, but the stretch method is not limited. The stretch process may be performed by stretching in one stage, or may be performed by stretch in multi-stages of two or more stages.

When the stretch method is the wet stretch, the stretch is performed in water, a water-soluble organic solvent, or a mixed solution thereof. The stretch treatment is preferably performed while dipping the polyvinyl alcohol-based resin film in the solution containing the crosslinking agent and/or the water-resistant additive. As the crosslinking agent, for example, a boron compound such as boric acid, borax or ammonium borate; a multivalent aldehyde such as glyoxal or glutaraldehyde; a multivalent isocyanate-based compound such as a biuret type, an isocyanurate type, or a block type; a titanium-based compound such as titanium oxysulfate; or the like may be used. In addition, ethylene glycol glycidyl ether, polyamide epichlorohydrin, or the like may be used. Examples of the water-resistant additive include succinic acid

peroxide, ammonium persulfate, calcium perclorate, benzoin ethyl ether, ethylene glycol diglycidyl ether, glycerin diglycidyl ether, ammonium chloride, magnesium chloride, or the like. The stretch is performed in a solution containing at least one or more kinds of the crosslinking agent and/or the water-resistant additive described above. The crosslinking agent is preferably boric acid. The concentration of the crosslinking agent and/or the water-resistant additive in the stretch process is preferably, for example, 0.5 to 15 weight%, and more preferably 2.0 to 8. 0 weight%. The stretch ratio is preferably 2 to 8 folds, and more preferably 5 to 7 folds. The stretch temperature is preferably 40 to 60°C, and more preferably 45 to 58°C. The stretch time is ordinarily 30 seconds to 20 minutes, and more preferably 2 to 5 minutes. The wet stretch process may be performed by stretch in one stage, but may be also performed by stretch in multi-stages of two or more stages.

A washing process of washing the film surface (hereinafter, referred to as the washing process 2) may be performed after performing the stretch process, as a precipitate of the crosslinking agent and/or the water-resistant additive, or a foreign substance may adhere to the film surface. The washing time is preferably 1 second to 5 minutes. The washing method is preferably performed by dipping in a washing solution, but may be performed by applying or coating the solution onto the polyvinyl alcohol-based resin film. The washing treatment may be performed in one stage, or may be performed in multi-stages of two or more stages. The solution temperature of the washing process is not particularly limited, but ordinarily 5 to 50°C, and preferably 10 to 40°C.

Examples of the solvent used in the treatment processes hereto include, for example, solvents such as water, dimethyl sulfoxide, N-methyl pyrrolidone, alcohols such as methanol, ethanol, propanol, isopropyl alcohol, glycerin, ethylene glycol, propylene glycol, diethylene glycol, triethylene glycol, tetraethylene glycol or trimethylol propane, and amines such as ethylene diamine or diethylene triamine, but are not limited thereto. In addition, a mixture of one or more kinds of these solvents may be used. The solvent is most preferably water.

A dry process of the film is performed after the stretch process or the washing process 2. The dry treatment may be performed by natural drying, or removal of moisture on the surface by compression by a roll or an air knife, a water-absorbing roll, or the like may be performed in order to enhance the dry efficiency, and/or ventilation drying may be performed. The temperature for the dry treatment is preferably 20 to 100°C, and more preferably 60 to 100°C. The time for the dry treatment may be 30 seconds to 20 minutes, but is preferably 5 to 10 minutes.

By the method described above, it is possible to obtain the polyvinyl alcohol-based resin film polarizing element of the invention that is improved in the durability. A similar polarizing element may be produced by incorporating the dichromatic dye into a film obtained from an amylose-based resin, a starch-based resin, a cellulose-based resin, a polyacrylic acid salt-based resin and the like, and stretching and orientating the hydrophilic resin in the share orientation and the like, although the film onto which the dichromatic dye is adsorbed in the polarizing element, is not a polyvinyl alcohol-based resin. However, the polarizing element film that comprising the polyvinyl alcohol-based resin film is most suitable.

The obtained polarizing element is disposed with a transparent protection layer on one side, or both sides thereof, whereby to produce a polarizing plate. The transparent protection layer may be disposed as a coating layer of a polymer, or a laminate layer of the film. The transparent polymer or the film forming the transparent protection layer is preferably a transparent polymer or film having a high mechanical intensity and good heat stability. Examples of the substance used as a transparent protection layer include cellulose acetate resins or films thereof such as triacetyl cellulose and diacetyl cellulose, acrylic resins or films thereof, polyvinyl chloride resins or films thereof, Nylon resins or films thereof, polyester resins or films thereof, polyarylate resins or films thereof, cyclic polyolefin resins or films thereof of having a cyclic olefin such as norbornene as a monomer, polyolefins or copolymers having polyethylene, polypropylene, or a cyclo-based or norbornene skeleton, resins or polymer or films having imide and/or amide as the main chain or the side chain, and the like. In addition, resins or films thereof having mesomorphismmay be disposed as a transparent protection layer. The thickness of the protection film is, for example, about 0.5 to 200 μm. The same kind or different kind of the resins or films thereof described above may be disposed on one side, or both sides in one or more layers, whereby to produce the polarizing plate.

In order to bond the transparent protection layer to the polarizing element, an adhesive is necessary. The adhesive is not particularly limited, but is preferably a polyvinyl alcohol-based adhesive. Examples of the polyvinyl alcohol-based adhesive include Gohsenol NH-26 (manufactured by The Nippon Synthetic Chemical Industry Co., Ltd.), GOHSEFIMER Z-200 (manufactured by The Nippon Synthetic Chemical Industry Co., Ltd.), Exceval RS-2117 (manufactured by KURARAY CO., LTD.) and the like, but are not limited thereto. The adhesive may be added with the crosslinking agent and/or the water-resistant additive. As the polyvinyl alcohol-based adhesive, a maleic anhydride-isobutylene copolymer is used, and an adhesive mixed with a crosslinking agent may be used as necessary. Examples of the maleic anhydride-isobutylene copolymer include ISOBAM #18 (manufactured by KURARAY CO., LTD.), ISOBAM #04 (manufactured by KURARAY CO., LTD.), ammonia-modified ISOBAM #104 (manufactured by KURARAY CO., LTD.), ammonia-modified ISOBAM #110 (manufactured by KURARAY CO., LTD.), imidized ISOBAM #304 (manufactured by KURARAY CO., LTD.), imidized ISOBAM #310 (manufactured by KURARAY CO., LTD.) and the like. At this time, as the crosslinking agent, a water-soluble multivalent epoxy compound may be used. Examples of the water-soluble multivalent epoxy compound include DENACOL EX-521 (manufactured by Nagase Chemtex Corporation), TETRAD-C (manufactured by Mitsubishi Gas Chemical Company, Inc.) and the like. In addition, as the other adhesive other than the polyvinyl alcohol-based resin, a known adhesive such as urethane-based, acrylic-based, or epoxy-based may be also used. In addition, for the purpose of improving the adhesion force of the adhesive or improving the water resistance, an additive such as a zinc compound, a chloride, and an iodide may be incorporated at the same time in about 0.1 to 10 weight% of the concentration. The additive is not limited. After bonding the transparent protection layer with the adhesive, dry or heat treatment is performed at a suitable temperature to obtain a polarizing plate.

The obtained polarizing plate may be disposed with various functional layers for improvement of the view angle and/or improvement of the contrast, or a layer or film having improved brightness on the surface of the protection layer or the film that becomes a non-exposed surface later, especially when the polarizing plate is bonded to a display device of liquid crystal, organic electroluminescence, or the like. In bonding the polarizing plate to the film or the display device, an adhesive is preferably used.

This polarizing plate may have well-known various functional layers such as an anti-reflective layer, an anti-glare layer, a hard coat layer on the other surface, namely, the exposed surface of the protection layer or the film. A coating method is preferred in a production of this layer having various functions, but the film having the function may be also bonded through an adhesive or a bonding agent. In addition, the various functional layers may be a layer or film controlling the phase difference.

With the method described above, the polarizing element and the polarizing plate of the invention can be obtained, and the wavelength having the lowest transmissivity in the transmissivity when two polarizing plates using the polarizing element of the invention are superimposed such that the absorption-axis directions orthogonally intersect becomes 565 to 700 nm. According to the invention, it is possible to obtain a polarizing element or a polarizing plate having favorable polarizing property, and having a property of no discoloration by a treatment solution or pH of an adhesive.

The thus-obtained polarizing element of the invention is disposed with a protection layer, or a function layer and a support, or the like as necessary, and is used in a liquid crystal projector, a calculator, a clock, a notebook computer, a word processor, a liquid crystal television, a polarizing lens, polarizing glasses, a car navigation and an indoor-outdoor measuring instrument, a display device, or the like as a polarizing plate bonded with a protection film.

## Examples

Hereinafter, the invention is further described in detail with Examples. However, the invention is not limited thereto. Meanwhile, evaluations for the transmissivity and the polarization degree shown in Examples were performed as described below. In addition, "parts" below means "parts by weight".

Each of the transmissivities was measured using a spectrophotometer ["U-4100" manufactured by Hitachi, Ltd.].

In the transmissivity of each wavelength obtained by the measurement, the transmissivity of one piece of the polarizing element was assumed to be a single body transmissivity Ts; the transmissivity when two pieces of the polarizing plates of the polarizing element were superimposed such that the absorption-axis directions were identical, was assumed to be a parallel position transmissivity Tp; and the transmissivity when two pieces of the polarizing plates were superimposed such that the absorption axes orthogonally intersected, was assumed to be an orthogonal position transmissivity Tc.

The polarization degree was obtained by the calculation formula described below from the parallel position transmissivity Tp and the orthogonal position transmissivity Tc.

$$\text{Polarization degree} = \{(Tp - Tc)/(Tp + Tc)\}1/2 \times 100$$

## Example 1

32.5 Parts of 2-aminonaphthalen-4,8-disulfonic acid (conventional name: C acid) were dissolved in 145 parts of water, and were added to 140 parts of water containing 26 parts of 35% hydrochloric acid, and 6.9 parts of sodium nitrite were added thereto at 15 to 20°C and the mixture was diazotized over one hour. Then, an aqueous solution comprising 13.7 parts of para-cresidine and 17.5 parts of 35% hydrochloric acid was added, and coupling was performed at 20°C over 4 hours while keeping pH to 3.0 to 3.5 with sodium acetate, until para-cresidine was not recognized with the spot test. Then, to the obtained aminoazo compound, 21.4 parts of 35% hydrochloric acid were added, and 6.9 parts of sodium nitrite were added at 10°C, and a second diazotization was performed at 15 to 20°C over 2 to 3 hours. Then, this was added to an aqueous solution comprising 31.5 parts of phenyl J acid, 125 parts of water and 11 parts of soda ash, and further a solution of soda ash was poured to keep pH to 8.5 to 9.5, and second coupling was performed at 20°C over 3 hours until the diazotization product was not recognized with the spot test to obtain solution containing the

disazo compound represented by Formula (3). The obtained solution was evaporated to dryness at 60°C, to obtain a pigment of Formula (3).

A polyvinyl alcohol-based resin film having a saponification degree of 99% or more and a thickness of 75 μm (VF series manufactured by KURARAY CO., LTD.) was dipped into 40°C warm water for 2 minutes to perform a swelling treatment. The swelling-treated film was dipped into a 45°C aqueous solution containing 0.05 weight% of pigment of Formula (3) and 0.1 weight% of sodium tripolyphosphate, to perform adsorption of the dyes. The film adsorbed with the dyes was washed with water, and after the washing, boric acid treatment was performed with a 40°C aqueous solution containing 2 weight% of boric acid for 1 minute. The obtained boric acid-treated film was treated in a 55°C aqueous solution containing 3.0 weight% of boric acid for 5 minutes while being stretched to 5. 0 folds. Washing was performed for 15 seconds with 30°C water with keeping the tension state of the obtained, boric acid-treated film. The dry treatment was immediately performed for the obtained treated film at 70°C for 9 minutes to obtain a polarizing element of 28 μm thickness. The single body transmissivity at λmax of the obtained polarizing element was 43.95%, and λmax was 580 nm.

Comparative Example 1

Treatment was performed in a similar manner except that adsorption of the dyes was performed on a polyvinyl alcohol-based resin film (VF series manufactured by KURARAY CO., LTD.) having a saponification degree of 99% or more and a thickness of 75 μm using the pigment of Example 16 of Patent Document 2, to obtain a polarizing element having a thickness of 28 μm. The single body transmissivity at λmax of the obtained polarizing element was 44.01%, and λmax was 590 nm.

Comparative Example 2

A polarized light was produced in a similar manner except that the pigment of Formula (3) was used in accordance with the method of Example 1 of Patent Document 3. The single body transmissivity at λmax of the obtained polarizing element was 44.03%, and λmax was 574 nm.

Measurements were performed for the polarizing elements obtained in Example 1, Comparative Example 1, and Comparative Example 2 with regard to the polarization degree; the visual color change when the polarizing element was dipped into an aqueous solution exhibiting pH 2 at 20°C adjusted with hydrochloric acid for 10 minutes, and the visual color change when the polarizing element was dipped into an aqueous solution exhibiting pH 11 at 20°C adjusted with sodium hydroxide for 10 minutes; and λmax when the polarizing element dipped into the aqueous solution for 10 minutes was taken out and then dried at 70°C for 9 minutes. The obtained results are shown in Table 1.

[Table 1]

| | Before dipping | | | After dipping in aqueous solution of pH = 2 | | After dipping in aqueous solution of pH = 11 | |
|---|---|---|---|---|---|---|---|
| | Polarization degree | Color | λmax | Color | λmax | Color | λmax |
| Example 1 | 97.12 | Violet | 580 | Violet | 580 | Violet | 580 |
| Comparative Example 1 | 95.38 | Blue-Vi olet | 590 | Blue-Vi olet | 567 | Blue | 605 |
| Comparative Example 2 | 61.39 | Red-Vi olet | 574 | Film dissolved after dipping | | Film dissolved after dipping | |

Table 1 shows measurement results of the polarization degree, the color, and λmax of the polarizing element obtained in Example 1 and Comparative Examples 1 and 2 at the initial state, in a case when dipped in pH = 2, and in a case when dipped in pH = 11, respectively. As understood from Table 1, the polarizing element of the invention has high polarization degree, has no color change even when being dipped in acidic and alkali solutions, respectively, and can maintain the color without being influenced by pH of a used adhesive or a solvent resistance test. The polarizing element or polarizing plate of the invention makes it possible to obtain a liquid crystal display equipment, a lens, and the like having high color stability by being used in a liquid crystal projector, a calculator, a clock, a notebook computer, a word processor, a liquid crystal television, a polarizing lens, polarizing glasses, a car navigation and an indoor-outdoor measuring instrument, a display device and the like.

## Claims

1. A polarizing element that comprises a film of a polyvinyl alcohol resin or a derivative thereof containing a disazo pigment represented by Formula (1), and having been stretched by a factor of at least three from the initial length, wherein the polarizing element has the lowest transmissivity at 565 to 700 nm in the transmissivity when two pieces of polarizing plates having the polarizing element are superimposed such that the absorption-axis directions orthogonally intersect.

[Chemical Formula 1]

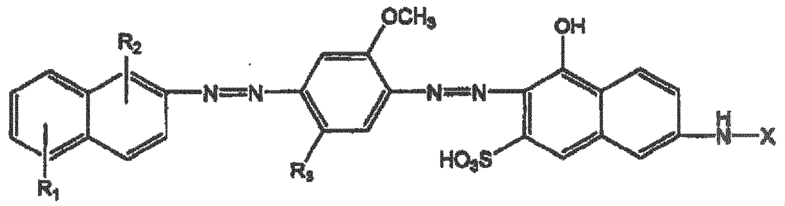

Formula (1)

(wherein $R_1$ and $R_2$ each independently represent a sulfo group, an alkyl group, an alkoxy group, an alkoxy group having a sulfo group, a carboxy group, a nitro group, an amino group, or a substituted amino group, $R_3$ represents an alkyl group, an alkoxy group, a sulfo group, or an alkoxy group having a sulfo group, and X represents a phenyl group or a benzoyl group that is unsubstituted or has one to three of one or more kinds of substituents selected from a group consisting of a methyl group, an alkyl group, a hydroxyl group, an amino group, a sulfo group and an alkoxy group.)

2. A polarizing plate in which a protection layer is disposed on one side or both sides of the polarizing element according to claim 1.

## Amended claims under Art. 19.1 PCT

**1.** (Amended) A polarizing element that comprises a film of a polyvinyl alcohol resin or a derivative thereof containing a disazo pigment represented by Formula (1), and having been stretched by a factor of at least three from the initial length,
wherein the polarizing element has the lowest transmissivity at 565 to 700 nm in the transmissivity when two pieces of polarizing plates having the polarizing element are superimposed such that the absorption-axis directions orthogonally intersect.

[Chemical Formula 1]

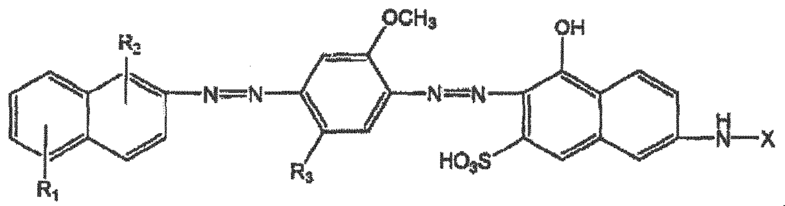

Formula (1)

(wherein $R_1$ and $R_2$ each independently represent a sulfo group, an alkyl group, an alkoxy group, an alkoxy group having a sulfo group, a carboxy group, a nitro group, an amino group, or a substituted amino group, R3 represents an alkyl group, an alkoxy group, a sulfo group, or an alkoxy group having a sulfo group, and X represents a phenyl group or a benzoyl group that is unsubstituted or has one to three of one or more kinds of substituents selected from a group consisting of a methyl group, an alkyl group, an amino group, a sulfo group and an alkoxy group.)

**2.** A polarizing plate in which a protection layer is disposed on one side or both sides of the polarizing element according to claim 1.

**INTERNATIONAL SEARCH REPORT**

International application No.
PCT/JP2012/063049

A. CLASSIFICATION OF SUBJECT MATTER
*G02B5/30*(2006.01)i, *C09B31/072*(2006.01)i, *G02F1/1335*(2006.01)i

According to International Patent Classification (IPC) or to both national classification and IPC

B. FIELDS SEARCHED

Minimum documentation searched (classification system followed by classification symbols)
G02B5/30, C09B31/072, G02F1/1335

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 08-225750 A (Sumitomo Chemical Co., Ltd.), 03 September 1996 (03.09.1996), paragraphs [0033], [0055] to [0060]; example 6 (Family: none) | 1-2 |
| A | JP 01-265205 A (Nippon Kayaku Co., Ltd.), 23 October 1989 (23.10.1989), examples 1 to 2, 5, 17, 19 to 20 (Family: none) | 1-2 |
| A | JP 08-127727 A (Mitsui Toatsu Chemicals, Inc.), 21 May 1996 (21.05.1996), claims; paragraphs [0002] to [0005]; example 17 (Family: none) | 1-2 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>10 August, 2012 (10.08.12) | Date of mailing of the international search report<br>21 August, 2012 (21.08.12) |
| Name and mailing address of the ISA/<br>Japanese Patent Office<br>Facsimile No. | Authorized officer<br><br>Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004137452 A
- JP 63189803 A
- JP 1172907 A
- JP 2001033627 A
- JP 2002296417 A
- JP 2003215338 A
- WO 2004092282 A
- JP 2001564112 A
- JP 2001027708 A
- JP 11218611 A
- JP 11218610 A
- JP 60156759 A